# EUROPÄISCHE PATENTSCHRIFT

(11) **EP 0 616 162 B1**
(45) Veröffentlichungstag und Bekanntmachung des Hinweises auf die Patenterteilung: **20.05.1998**
(21) Anmeldenummer: 94102685.8
(22) Anmeldetag: 23.02.1994
(51) Int. Cl.: F16L 23/024, F16L 23/032

(54) **Dünnwandiges Blechrohr mit auf dieses aufgesetztem einstückigem Flanschring**
Thin-walled pipe with one-piece flange ring attached thereto
Tuyau en tôle à paroi mince pourvu d'un anneau de bride en une pièce

(30) Priorität: 13.03.1993 DE 4308013
(43) Veröffentlichungstag der Anmeldung: 21.09.1994
(73) Patentinhaber: METU-SYSTEM MEINIG KG, 78604 Rietheim-Weilheim (DE)
(72) Erfinder: Meinig, Manfred, D-78604 Rietheim-Weilheim (DE)
(74) Vertreter: Patentanwälte Westphal, Buchner, Mussgnug Neunert, Göhring

(56) Entgegenhaltungen:
- DE-A- 3 314 064
- DE-A- 3 314 129
- US-A- 1 907 397
- US-A- 2 005 267
- US-A- 3 437 358
- US-A- 5 016 925

## Beschreibung

Die Erfindung betrifft ein dünnwandiges Blechrohr mit auf dieses aufgesetztem einstückigem Flanschring nach dem Oberbegriff des Anspruchs 1.

Ein Blechrohr mit Flanschring ist beispielsweise aus DE 3143893 C1 bekannt. Um zwei Blechrohrenden mit aufgesteckten Flanschringen dieser Art zur Herstellung einer Stoßverbindung miteinander zu verbinden, wird auf die kegelförmigen Spannteile ein sie eng zusammenhaltender Spannring aufgesetzt. Die Festlegung des ins Innere des Rohrendes ragenden Ringschenkels an der Wandung des Blechrohrs erfolgt bei der bekannten Vorrichtung durch einen unter Vorspannung ins Rohrinnere eingetriebenen, sich linienförmig an der Rohrinnenwand einspreizenden Ringsteg. Der Ringschenkel ist dabei im wesentlichen zweischichtig ausgebildet, wobei nur die den eingespreizten Ringsteg bildende, zur Rohrinnenwand hin liegende Schicht linienförmig an der Rohrinnenwand anliegt.

In ähnlicher Weise erfolgt die Festlegung des ebenfalls zweischichtig ausgebildeten Ringschenkels durch zwei parallele Einspreizkanten bei der Ausführungsform gemäß DE 3515737 C2.

Auch der ins Rohrinnere ragende Ringschenkel nach DE 4023 470 A1 ist teils zwei-, teils dreischichtig ausgebildet und an der Rohrinnenwand angepunktet.

Bei einer anderen Ausführungsform gemäß EP 346143 B1 erfolgt die Befestigung des dünnwandigen und zweischichtigen Ringschenkels an der Rohrwandung durch Nieten. Das gleiche gilt für den Flanschring gemäß US 5015018.

Für mit hohen Drücken beanspruchte dickwandige Stahlrohre sind aus DE 484005 und DE 2559936 C2 Lösungen bekannt, bei denen im Vergleich zur Rohrstärke wesentlich dickere Flanschringe aufgewalzt bzw. angeschweißt werden, wobei zahlreiche Arbeitsgänge erforderlich sind, um einen festen Sitz der Flanschringe auf den Rohrenden zu erreichen.

Die dem Oberbegriff des Anspruchs 1 entsprechende US 1907397 zeigt die Befestigung eines massiven Flanschringes an einem dünnen Blechrohr. Dabei wird zunächst das Rohrende auf den entsprechenden Ringflansch aufgeschoben, bis es an dem nach außen stehenden Befestigungsflansch anstößt. Dann wird das Rohrende von außen her auf den ins Rohrinnere stehenden Ringflansch aufgewalzt, wobei Wandmaterial des Blechrohrs in Nuten eingedrückt wird, die auf der Außenseite des Ringflansches vorgesehen sind. Zur zusätzlichen Sicherung des Rohrendes wird dann ein vom Befestigungssteg schräg zum Blechrohr hin stehender Steg unter starker Krafteinwirkung an den Befestigungsflansch angedrückt, wodurch sein Ende am Rohrende zur Anlage kommt. Erst nach dieser Festlegung kann ein Verbindungsring an zwei aneinanderstoßenden Befestigungsflanschen angebracht werden. Diese Befestigungsart erfordert einen hohen Maschinen- und Energieaufwand.

Durch die Erfindung soll ein Flanschring dieser Art so verbessert werden, daß er einfacher und billiger herstellbar, trotzdem hoch und gleichmäßig belastbar sowie in einfacher Weise stabil und dicht am Ende eines Blechrohrs festlegbar ist.

Diese Aufgabe wird erfindungsgemäß durch die Merkmale des Anspruchs 1 gelöst.

Der erfindungsgemäße Flanschring läßt sich auf einfachste Weise stabil an Blechrohr anbringen, indem er einfach auf das Ende des Blechrohrs aufgeschlagen oder in dieses eingeschlagen wird, so daß er mit Preßsitz fest und dicht an diesem Ende anliegt. Gegebenenfalls kann, falls der Preßsitz nicht ausreicht oder sich nicht einwandfrei verwirklichen läßt, zusätzlich ein anderes Haltemittel zum Festhalten des Flanschrings auf dem Blechrohr angewendet werden.

Vorteilhaft ist eine wenigstens teilweise wesentlich dickere Ausführung des Flanschrings gemäß Anspruch 2.

Da das Querschnittsprofil dieser Ausführungsform des Flanschrings nicht hohl und dünnwandig, sondern einschichtig massiv und im Vergleich zur Stärke des Blechrohrs dickwandig ist, besitzt er eine sehr hohe innere Stabilität. Die kegelförmigen Spannteile bilden Auflageflächen für einen auch bei bekannten Stoßverbindungen verwendeten Spannring. Der erfindungsgemäße Flanschring muß nicht zuerst zu einem hohlen Profil geformt und sodann zu einem Ring gebogen werden, sondern läßt sich aus einem Stück pressen. Werkzeuge zum Pressen des Flanschrings lassen sich sehr einfach und billig durch Drehen herstellen. Der Materialverbrauch läßt sich dadurch minimal machen, daß die Zuschnitte der verschiedenen Flanschdurchmesser bei der Herstellung ineinandergeschachtelt werden. Die Herstellungskosten des erfindungsgemäßen Flanschrings liegen daher bei nur 50 bis 70% der Herstellungskosten eines herkömmlichen Flanschrings. Wegen der endlosen Ringform ist er gleichmäßig radial belastbar.

Durch Einschlagen des Ringschenkels ins Innere des Blechrohrendes bzw. Aufschlagen desselben auf die Außenseite des Blechrohrendes, jeweils mit sattem Sitz oder Preßsitz, ist im allgemeinen keine weitere Befestigung und Abdichtung des Ringflansches am Blechrohr erforderlich. Im Gegensatz zu den bekannten Flanschringen kann der erfindungsgemäße Flanschring jederzeit sowohl im Rohrinneren als auch an der Außenseite des Rohr befestigt werden, was je nach Verwendungszweck sehr wichtig ist. So werden für Absaugungen und Spänetransport innen glatte Rohre und infolgedessen außen aufgesetzte Flanschringe benötigt. Bei normaler Lufttechnik, insbesondere bei Wickelfalzrohren mit nach außen stehendem Wickelfalz, läßt sich der Ringschenkel jedoch innen im Rohrende befestigen. Zum leichteren Einfädeln bzw. Aufschieben des Ringschenkels in bzw. auf das Rohrende ist der freie Rand des Ringschenkels bezüglich des Rohrdurchmessers leicht eingezogen bzw. angeschrägt (innere Anbringung) bzw. leicht aufgeweitet (äußere Anbringung des Ringschenkels). Dabei liegt der Ringschenkel trotzdem im wesentlichen durchgängig an der Wandung des Blechrohrs an.

Bei der Ausführungsform gemäß Anspruch 1 verläuft der Ringschenkel leicht konisch mit einer Konizität zwischen 2° und 10° verläuft. Dabei kann entweder der ganze Ringschenkel gleichmäßig konisch ausgebildet sein, oder er kann diese Konizität nur in einem axialen Abschnitt aufweisen, gemäß Anspruch 3 vorzugsweise in dem an den Befestigungsflansch angrenzenden Abschnitt. Durch das Eintreiben oder Auftreiben eines solchen konischen Ringschenkels in bzw. auf das Rohrende wird dieses entweder leicht aufgeweitet und das Rohr legt sich eng und luftdicht um den Ringschenkel, oder das Rohrende wird beim Aufschlagen leicht eingezogen und liegt unter hohem Druck und luftdicht am Ringschenkel an. Dadurch ergibt sich eine noch wesentlich stabilere Festlegung des Flanschrings am Rohrende. Je nach Genauigkeit und Toleranzen der zur Verwendung kommenden Rohrdurchmesser kann der Ringschenkel kürzer oder länger ausgebildet werden. Auch durch einen größeren Konizitätswinkel kann größeren Rohrtoleranzen Rechnung getragen werden. In jedem Falle läßt sich auf einfache Weise ein festes luftdichtes Anliegen der Rohrwand am Ringschenkel erzielen.

Bei der nur teilweise konischen Ausbildung des Ringschenkels läßt sich zunächst der zylindrische Abschnitt desselben verhältnismäßig leicht in das Rohrende einstecken oder auf dasselbe aufstecken, und sodann muß erst der Flanschring mit größerem Kraftaufwand aufgehämmert werden.

Die Ansprüche 4 und 5 betreffen für die Handhabung besonders zweckmäßige Ausgestaltungen des Flanschrings, wie oben erläutert.

In einzelnen Anwendungsfällen kann es erwünscht oder zweckmäßig sein, zusätzliche Abdichtung oder Festigkeit des Flanschrings am Rohrende zu erzielen. Derartige Maßnahmen betreffen die Unteransprüche 6 bis 10.

Anhand der Figuren wird die Erfindung näher erläutert. Es zeigen
- Fig. 1: eine Schrägansicht eines nicht zur Erfindung gehörigen Flanschrings ähnliches Bauart,
- Fig. 2: einen axialen Teilschnitt durch eine zwei Flanschringe gemäß Fig. 1 aufweisende Stoßverbindung zwischen zwei Rohrenden,
- Fig. 3 - 10: axiale Teilschnitte durch verschiedene Ausführungsformen eines auf ein Rohrende aufgesetzten erfindungsgemäßen Flanschrings,
- Fig. 11 - 13: geschnittene Teilschrägansichten von weiteren Ausführungsformen eines auf ein Rohrende aufgesetzten erfindungsgemäßen Flanschrings, und
- Fig. 14 und 15: den Fig. 3 - 10 entsprechende Teilschnitte durch weitere Ausführungsformen des erfindungsgemäßen Flanschrings.

Gleiche oder entsprechende Teile sind in den Figuren durchgehend mit den gleichen Bezugszeichen versehen.

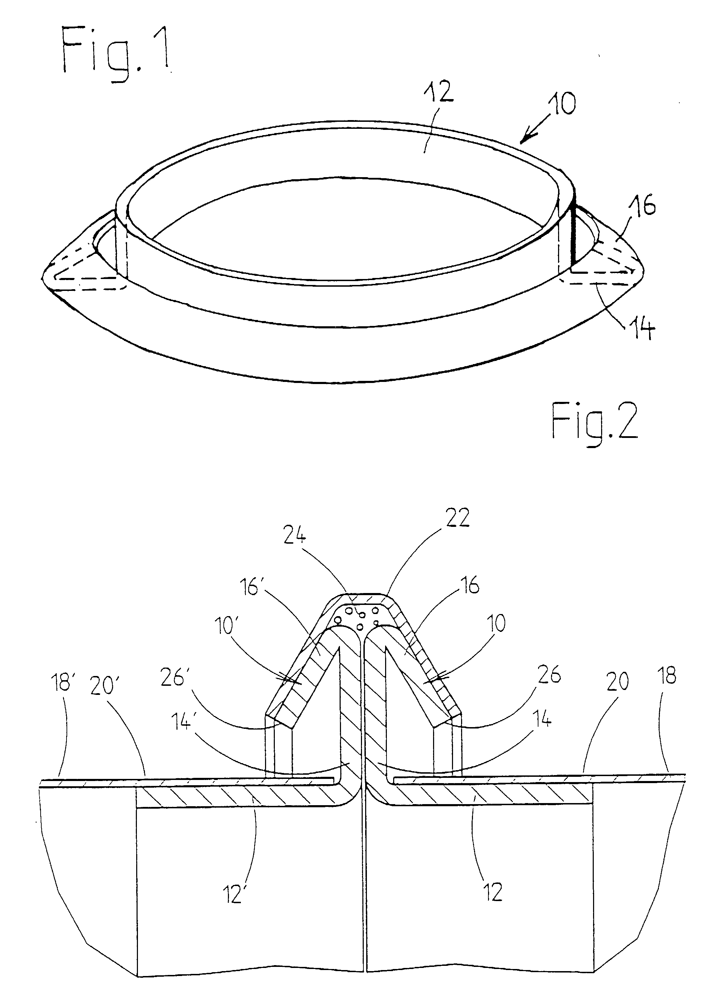

Wie aus Fig. 1 ersichtlich, besteht eine Ausführungsform eines nicht zur Erfindung gehörigen Flanschrings grundsätzlich aus einem einstückigen und einschichtigen, verhältnismäßig dickwandigen und massiven, allgemein mit 10 bezeichneten geschlossenen Ring. Er weist einen am nicht dargestellten Rohrende anliegenden, im wesentlichen zylindrischen und allenfalls leicht konischen Ringschenkel 12, einen radial nach außen ragenden Befestigungsflansch 14 und einen kegelförmig zum Ringschenkel 12 zurückgebogenen Spannteil 16 auf. Ohne an irgendeiner Stelle Hohlprofil aufzuweisen oder zweibzw. mehrschichtig ausgebildet zu sein noch Verstärkungsstege oder dergl. aufzuweisen, ist der aus Metall bestehende Flanschring in sich außerordentlich stabil. Er hält den auftretenden Kräften in jeder Richtung ausgezeichnet stand.

Wie aus Fig. 2 ersichtlich, ist er im Vergleich zu dem dünnwandigen Blechrohr 18, auf dessen Ende 20 er aufgesetzt ist, verhältnismäßig dickwandig und massiv ausgebildet. Das Ende des Blechrohrs 18 liegt bei der Ausführungsform gemäß Fig. 2 an der Außenseite des in wesentlichen zylindrischen Ringschenkels 12 satt und gegebenenfalls mit Preßsitz an. Dadurch ist der Flanschring 10 bzw. 10' für viele Anwendungsfälle ausreichend dicht am Ende 20 bzw. 20' des Blechrohrs 18 bzw. 18' festgelegt. Soweit der Flanschring einer stärkeren Belastung in Axialrichtung ausgesetzt ist, empfiehlt es sich, diesen durch Nieten, Verschrauben, Punktschweißen oder dgl. am Blechrohr zu sichern. Die Teile des zweiten Flanschrings 10' sind in Fig. 2 analog mit 12', 14' und 16' bezeichnet. Für Ausbildung und Anbringung dieses zweiten Flanschrings 10' am zweiten Rohrende 20' gelten die oben für den Flanschring 10 gegebenen Erläuterungen ebenfalls. Zur Bildung einer Stoßverbindung werden die beiden Befestigungsflansche 14 und 14' aneinandergelegt und mit einem Spannring 22 von im wesentlichen V-förmigen Querschnitt mit eingelegtem Dichtungsband 24 verbunden. Der zunächst offene Spannring 22 wird hierbei auf die beiden Spannteile 16, 16' der Flanschringe 10,10' aufgebracht und anschließend mit einer Spannschraube, einem Spannschloß oder dgl. geschlossen. Die Spannteile 16, 16' enden jeweils in einem freien Rand 26 bzw. 26'. Dadurch ist eine stabile und dichte Verbindung zwischen den beiden Rohrabschnitten 18 und 18' hergestellt.

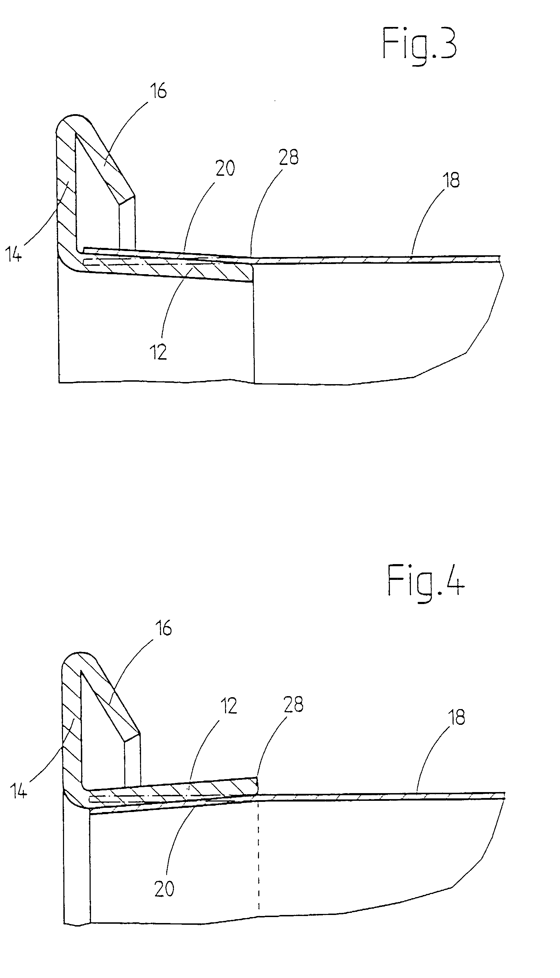

Die in Fig. 3 gezeigte erfindungsgemäße Ausführungsform unterscheidet sich von der Ausführungsform gemäß Fig. 1 und 2 im wesentlichen dadurch, daß der ins Innere des Rohrendes 20 eingetriebene Ringschenkel 12 durchgehend mit einer geringfügigen Konizität von etwa 2° bis 10° versehen ist, wobei der Außendurchmesser des freien Randes 28 des Ringschenkels 12 zum besseren Einfädeln nur unwesentlich kleiner ist als der Innendurchmesser des Blechrohrs 18. Durch den bis zum Befestigungsflansch 14 hin gleichmäßig größer werdenden Durchmesser des Ringschenkels 12 wird das Rohrende 20 beim Einhämmern des Ringschenkels 12 ins Rohrinnere etwas aufgeweitet und liegt dadurch luftdicht und außerordentlich fest auf der Außenseite des Ringschenkels 12 auf, ohne daß eine zusätzliche Axialsicherung durch Nieten, Punktschweißen oder dgl. erforderlich ist.

Fig. 4 zeigt eine Ausführungsform, bei der der Ringschenkel 12 vom Befestigungsflansch 14 weg leicht konisch nach außen verläuft, und zwar in analoger Weise, wie er in Fig. 3 leicht konisch nach innen verläuft. Der Innendurchmesser seines freien Randes 28 ist dabei zum leichteren Aufstecken auf das Rohrende 20 nur geringfügig größer als der Außendurchmesser des Rohrs 18. Durch das Aufschlagen des Ringschenkels 12 unter Kraftanwendung auf die Außenseite des Rohrendes 20 wird dieses leicht zusammengedrückt, wodurch es außerordentlich fest im Ringschenkel 12 sitzt.

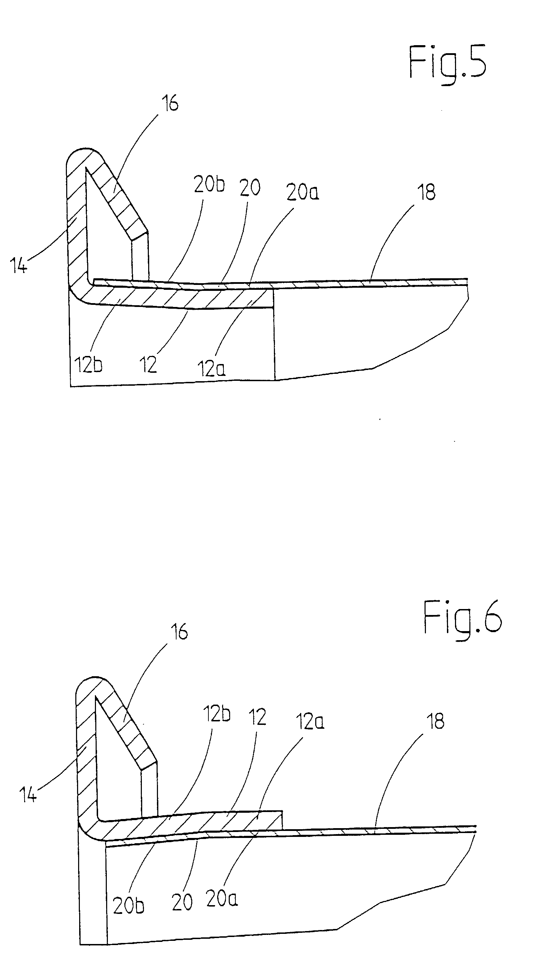

Eine etwas einfacher auf das Rohrende 20 aufzusteckende Variante ist in Fig. 5 dargestellt. Hierbei weist der Ringschenkel 12 einen äußeren zylindrischen Abschnitt 12a und einen zum Befestigungsflansch 14 in gelegenen, leicht konischen Abschnitt 12b auf. Dadurch wird nur der Endabschnitt 20b des Rohrendes 20 leicht aufgeweitet, während der leichter einzufädelnde zylindrische Abschnitt 12a ohne Aufweitung des entsprechenden Rohrabschnitts 20a in diesem festsitzt.

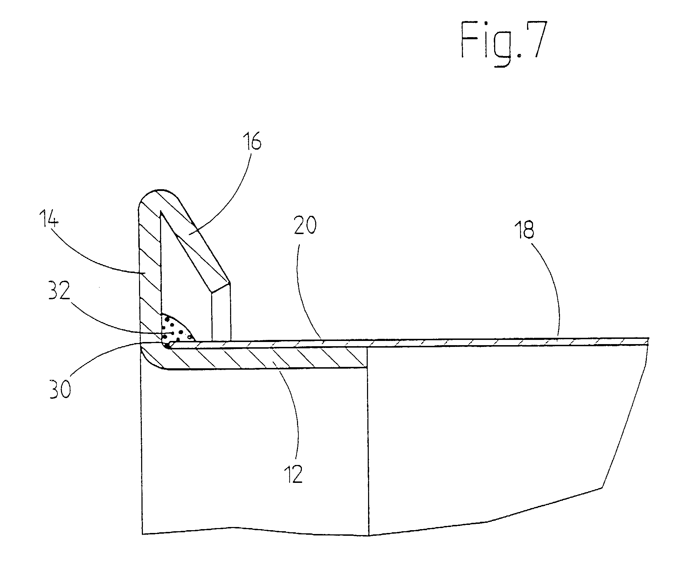

Eine der in Fig. 5 gezeigten analoge Ausführungsform ist in Fig. 6 gezeigt, bei der der Ringschenkel 12, wie in Fig. 4, auf die Außenseite des Rohrendes 20 aufgesetzt ist, jedoch ebenfalls in einen leichter aufzusteckenden zylindrischen Abschnitt 12a und einen leicht konischen Abschnitt 12b unterteilt ist, wobei nur der konische Abschnitt 12b den Endabschnitt 20b des Rohrendes 20 verformt, während der zylindrische Abschnitt 12a mit Paßsitz oder Preßsitz auf der Außenseite des unverformten Abschnits 20a aufliegt. Die Ausführungsform gemäß der Fig. 7 entspricht im wesentlichen der Ausführungsform gemäß Fig. 2. Zusätzlich ist hier am Rand 30 des Blechrohrendes 20 im Winkel zwischen dem im wesentlichen zylindrischen oder leicht konischen Ringschenkel 12 und dem Befestigungsflansch 14 eine Dichtungsrauße 32, z.B. aus Mastik, angebracht, die in Fällen, in denen eine noch bessere Gas- bzw. Flüssigkeitsabdichtung erwünscht ist, zweckmäßig sein kann.

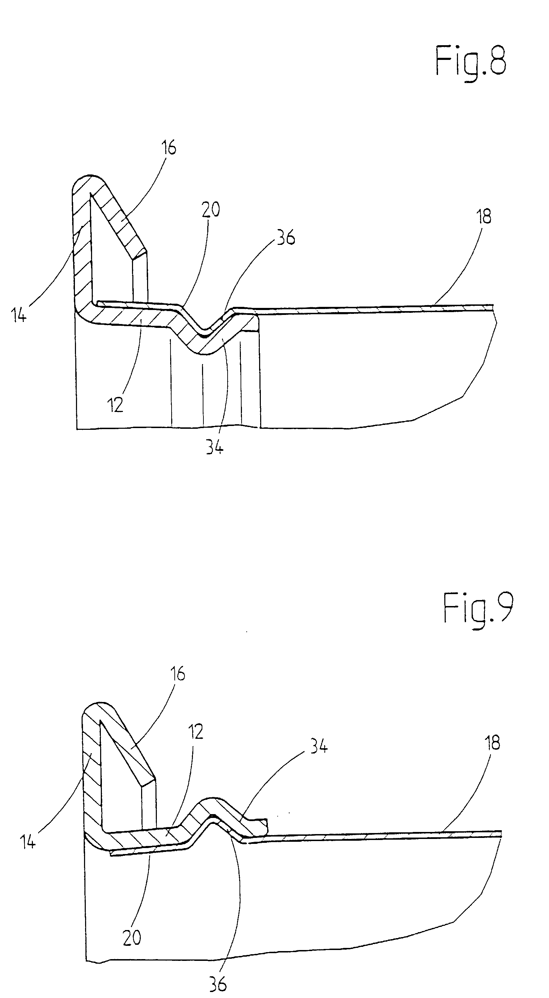

Falls in extremen Fällen die Befestigung des Ringschenkels 12 am Rohrende 20 mit Preßsitz nicht ausreichen sollte, kann zur Sicherheit bei einem am Rohrinneren anliegenden leicht konischen dicken Ringschenkel 12 gemäß Fig. 8 eine nach innen springende, ringförmig um den Umfang verlaufende Sicke 34 im Ringschenkel 12 vorgesehen werden, in welche ein ringförmiger Teil 36 der Wandung des Blechrohrs 18 eingedrückt werden kann.

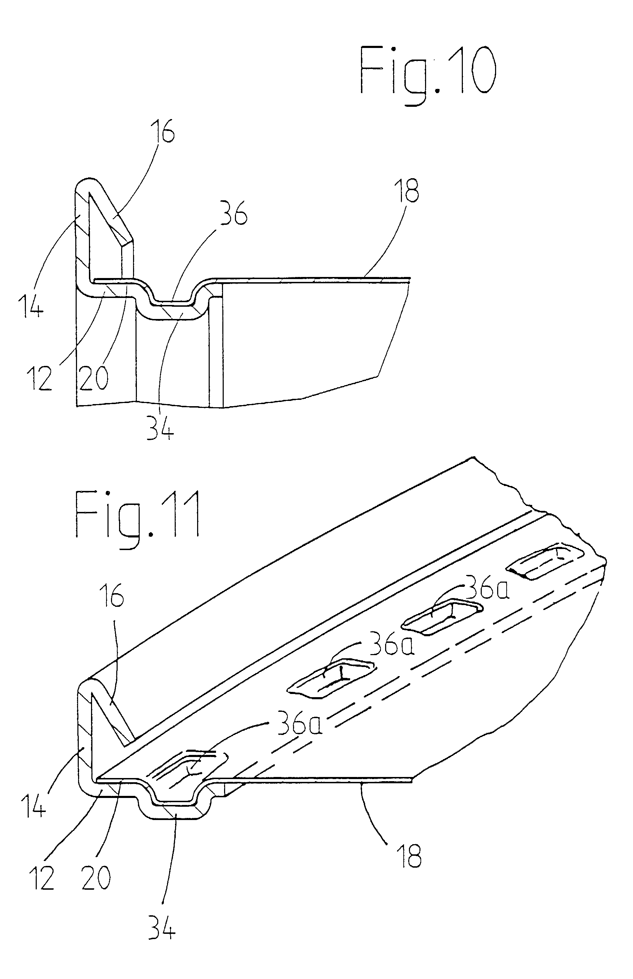

Analog ist gemäß Fig. 9 ein an der Außenseite des Rohrendes 20 leicht konisch aniegender dicker Ringschenkel 12 mit eienr nach außen springenden, ringförmig um den Umfang des Ringschenkels 20 verlaufenden Sicke 34 versehen, in welche ein Wandungsteil 36 des Blechrohrs 18 zur weiteren Festlegung des Flanschrings eingedrückt wird.

Die Ausführungsform der Fig. 10 entspricht im wesentlichen derjenigen von Fig. 8, wobei jedoch die Sicke 34 und der in diese gedrückte Wandungsteil 36 des Blechrohrs 18 breiter und mit einem flachen Boden ausgebildet sind und der Ringschenkel 12 im wesentlichen zylindrisch verläuft.

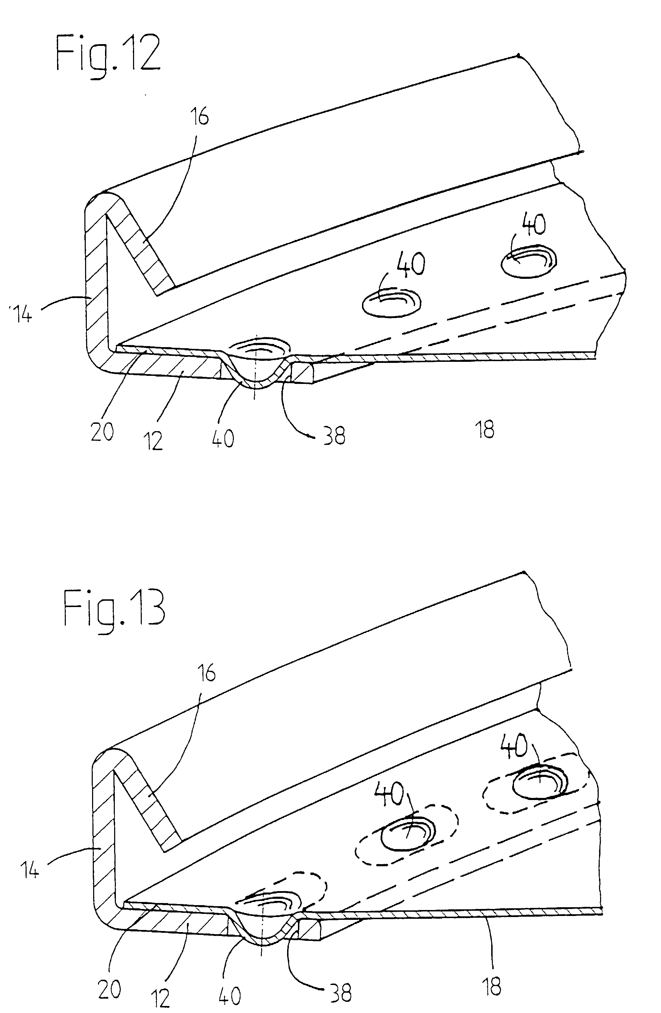

Die Ausbildung des Ringschenkels 12 der Ausführungsform gemäß Fig. 11 ist ähnlich wie bei der Ausführungsform gemäß Fig. 10. Zur Vereinfachung des Eindrückens eines Teils der Wandung des Blechrohrs 18 wird jedoch bei dieser Ausführungsform keine durchgehende Sicke 36, sondern es werden nur einzelne, in einfacher Weise mit einer Zange oder dergl. anzubringende Einsenkungen 36a in Abständen voneinander angebracht. Dadurch wird eine kostspielige Sickenmaschine eingespart. Bei der Ausführungsform gemäß Fig. 12 weist der ebenfalls zylindrisch ausgebildete Ringschenkel 12 eine in Umfangsrichtung verlaufende Reihe von Löchern 38 auf, in welche entsprechende Teile 40 der Wandung des Blechrohrs 18 eingedrückt werden. Das Eindrücken dieser buckelförmigen Einsenkungen 40 kann mit einer einfachen, speziell gestalteten Zange erfolgen. Es ist klar, daß die buckelförmigen Einsenkungen 40 beim innen sitzenden Ringschenkel 12 nach innen und beim nicht dargestellten außen sitzenden Ringschenkel 12 nach außen gerichtet sind.

Noch praktischer ist das Eindrücken der ringförmigen Einsenkungen 40 bei der Ausführungsform gemäß Fig. 13, bei der die Löcher 38 nicht rund wie beim Beispiel der Fig. 12, sondern in Umfangsrichtung länglich ausgebildet sind. Sie können wie die Löcher 38 bei der Ausführungsform gemäß Fig. 12 in einfacher Weise aus dem Ringschenkel 12 ausgestanzt werden. Die Einsenkungen 40 müssen bei diesen Langlöchern 38 nicht so genau placiert werden, was die Herstellung der Verankerungen vereinfacht.

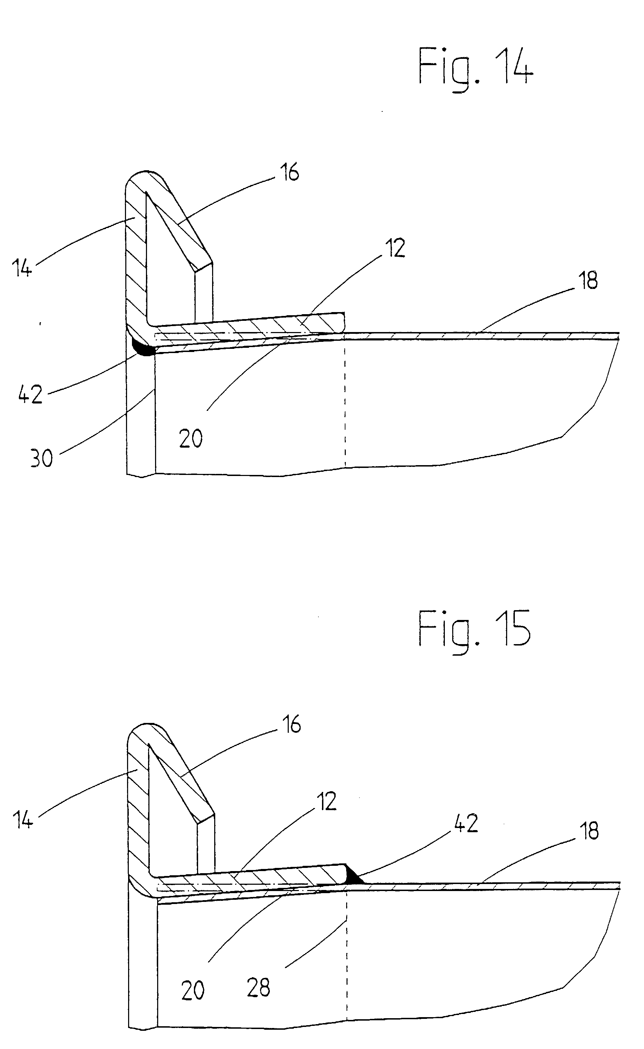

Fig. 14 zeigt eine Ausführungsform mit einem außen auf das Rohrende 20 aufgesetzten zylindrischen oder leicht konischen Ringschenkel 12, wobei der Rand 30 des Rohrendes 20 an das an den Befestigungsflansch 14 angrenzende Ende des Ringschenkels 12 mittels einer Schweißraupe 42 angeschweißt ist. Dadurch ergibt sich eine nochmals verbesserte Stabilität und Abdichtung, wenn eine solche erwünscht ist. Diese Ausführungsform eignet sich auch für dickere Blechrohre besonders gut.

Eine analoge Ausführungsform mit außen aufgesetztem, zylindrischem oder leicht konischem Ringschenkel 12 zeigt Fig. 15, wobei in diesem Fall der freie Rand 28 des Ringschenkels 12 mittels einer Schweißraupe 42 an der Außenseite des Blechrohrs 18 angeschweißt ist.

## Patentansprüche

1. Dünnwandiges Blechrohr (18) mit auf dieses aufgesetztem einstückigem Flanschring (10) zur Herstellung einer Stoßverbindung zwischen zwei Rohrabschnitten (18,18'), mit einem etwa radial nach außen stehenden Befestigungsflansch (14), der an seinem radial äußeren Ende einen kegelförmig zum Blechrohr (18) hin umgebogenen, frei endenden Spannteil (16) trägt, und mit einem vom radial inneren Ende des Befestigungsflansches (14) abstehenden Ringschenkel (12), wobei der Flanschring (10) einschichtiges Massivprofil besitzt und der Außendurchmesser des Ringschenkels (12) dem Innendurchmesser des Blechrohrs (18,20) oder der Innendurchmesser des Ringschenkels (12) dem Außendurchmesser des Blechrohrs (18,20) angepaßt ist, der Ringschenkel (12) wenigstens teilweise leicht konisch verläuft und wobei der Außendurchmesser des freien Randes (28) des Ringschenkels geringfügig kleiner ist als der Innendurchmesser des Blechrohrs (18) bzw. der Innendurchmesser des freien Randes (28) geringfügig größer ist als der Außendurchmesser des Blechrohrs (18), dadurch gekennzeichnet, daß die Konizität des Ringschenkels (12) zwischen 2° und 10° beträgt und beim Auftreiben ein Aufweiten bzw. Zusammendrängen des Endes (20) des Blechrohrs (18) bewirkt und daß das Ende (20) des Blechrohrs (18) lediglich durch sattes und luftdichtes allseitiges Anliegen an der Außen- bzw. Innenseite des Ringschenkels (12) mit Preßsitz auf diesem gehalten ist.

2. Blechrohr mit Flanschring nach Anspruch 1, dadurch gekennzeichnet, daß das Massivprofil des Flanschrings (10) im Verhältnis zur Blechstärke des Blechrohrs (18) dickwandig ist.

3. Blechrohr mit Flanschring nach Anspruch 1 oder 2, dadurch gekennzeichnet, daß der Ringschenkel (12) wenigstens in einem an den Befestigungsflansch (14) angrenzenden Abshcnitt (12b) leicht konisch verläuft.

4. Blechrohr mit Flanschring nach einem der vorangehenden Ansprüche, dadurch gekennzeichnet, daß der Durchmesser des Ringschenkels (12) vom Befestigungsflansch (14) zu seinem freien Rand (28) hin abnimmt und der Außendurchmesser des freien Randes (28) geringfügig kleiner ist als der Innendurchmesser des Blechrohrs (18).

5. Blechrohr mit Flanschring nach einem der Ansprüche 1 bis 3, dadurch gekennzeichnet, daß der Durchmesser des Ringschenkels (12) vom Befestigungsflansch (14) zu seinem freien Rand hin zunimmt und der Innendurchmesser des freien Randes (28) geringfügig größer ist als der Außendurchmesser des Blechrohrs (18).

6. Blechrohr mit Flanschring nach einem der vorangehenden Ansprüche, dadurch gekennzeichnet, daß er mittels einer Dichtungsraupe (32) gegen das Ende (20) des Blechrohrs (18) abgedichtet ist.

7. Blechrohr mit Flanschring nach einem der vorangehenden Ansprüche, dadurch gekennzeichnet, daß der Ringschenkel (12) eine in Umfangsrichtung verlaufende Reihe von Löchern (38) aufweist, in welche die Wandung (40) des Blechrohrs (18,20) eindrückbar ist.

8. Blechrohr mit Flanschring nach Anspruch 7, dadurch gekennzeichnet, daß die Löcher (38) in Umfangsrichtung längliche Form besitzen.

9. Blechrohr mit Flanschring nach einem der vorangehenden Ansprüche, dadurch gekennzeichnet, daß das Blechrohr (18,20) am Ringschenkel (12) angeschweißt ist.

10. Blechrohr mit Flanschring nach einem der vorangehenden Ansprüche, dadurch gekennzeichnet, daß ineinandergreifende Ringsicken (34,36) in Ringschenkel (12) und Wandung des Blechrohrs (18,20) gedrückt sind.

## Claims

1. Thin-walled sheet-metal pipe (18) having an integral flanged ring (10) mounted thereon for making a butt joint between two pipe sections (18, 18') having an approximately radially outwardly projecting attachment flange (14) which carries, at its readially outer end, a freely ending clamping part (16) bent round conically towards the sheet-metal pipe (18), and having an annular limb (12) projecting from the radially internal end of the attachment flange (14), the flanged ring (10) having a single-layer solid profile and the external diameter of the annular limb (12) being matched to the internal diameter of the sheet-metal pipe (18, 20) or the internal diameter of the annular limb (12) being matched to the external diameter of the sheet-metal pipe (18, 20), the annular limb (12) extending at least partly in a slightly conical fashion and the external diameter of the free rim (28) of the annular limb being slightly smaller than the internal diameter of the sheet-metal pipe (18) or the internal diameter of the free rim (28) being slightly larger than the external diameter of the sheet-metal pipe (18), respectively, characterized in that the conicity of the annular limb (12) is between 2° and 10° and, when forced on, brings about a widening or compression, respectively, of the end (20) of the sheet-metal pipe (18) and in that the end (20) of the sheet-metal pipe (18) is held only by close-fitting and airtight all-round contact with the outside or inside, respectively, of the annular limb (12) by press-fitting to the latter.

2. Sheet-metal pipe having a flanged ring according to Claim 1, characterized in that the solid profile of the flanged ring (10) is thick-walled compared with the sheet-metal thickness of the sheet-metal pipe (18).

3. Sheet-metal pipe having a flanged ring according to Claim 1 or 2, characterized in that the annular ring (12) extends slightly conically at least in a section (12b) adjacent to the attachment flange (14).

4. Sheet-metal pipe having a flanged ring according to one of the preceding claims, characterized in that the diameter of the annular limb (12) decreases from the attachment flange (14) towards its free rim (28) and the external diameter of the free rim (28) is slightly less than the internal diameter of the sheet-metal pipe (18).

5. Sheet-metal pipe having a flanged ring according to one of Claims 1 to 3, characterized in that the diameter of the annular limb (12) increases from the attachment flange (14) towards its free end and the internal diameter of the free rim (28) is slightly larger than the external diameter of the sheet-metal pipe (18).

6. Sheet-metal pipe having a flanged ring according to one of the preceding claims, characterized in that it is sealed by means of a sealing bead (32) with respect to the end (20) of the sheet-metal pipe (18).

7. Sheet-metal pipe having a flanged ring according to one of the preceding claims, characterized in that the annular limb (12) has a series, extending in the circumferential direction, of holes (38) into which the wall (40) of the sheet-metal pipe (18, 20) can be pressed.

8. Sheet-metal pipe having a flanged ring according to Claim 7, characterized in that the holes (38) have an elongated shape in the circumferential direction.

9. Sheet-metal pipe having a flanged ring according to one of the preceding claims, characterized in that the sheet-metal pipe (18, 20) is welded to the annular limb (12).

10. Sheet-metal pipe having a flanged ring according to one of the preceding claims, characterized in that interlocking annular corrugations (34, 36) are pressed into the annular limb (12) and wall of the sheet-metal pipe (18, 20).

## Revendications

1. Tube en tôle à paroi mince (18) sur lequel est monté un anneau de bride monobloc (10) pour réaliser la liaison bout à bout de deux éléments tubulaires (18, 18'), cet anneau présentant une bride de fixation (14) faisant saillie sensiblement radialement vers l'extérieur et portant à son extrémité radiale externe une partie de serrage (16) rabattue en cône vers le tube (18) et se terminant par une extrémité libre, tandis qu'une branche annulaire (12) part de son extrémité radiale interne, l'anneau (10) étant constitué d'une seule couche massive avec adaptation du diamètre externe de la branche annulaire (12) au diamètre interne du tube (18, 20) ou du diamètre interne de la branche annulaire (12) au diamètre externe du tube (18, 20) cette branche annulaire étant au moins pour une partie, légèrement conique, le diamètre externe du bord libre (28) de la branche annulaire étant légèrement inférieur au diamètre interne du tube (18) ou le diamètre interne du bord libre (28) étant légèrement supérieur au diamètre externe du tube (18),
caractérisé en ce que
la conicité de la branche annulaire (12) est comprise entre 2 et 10°, le montage produisant un élargissement ou un resserrement de l'extrémité (20) du tube (18), cette extrémité étant maintenue sur la branche (12) par contact large et étanche à l'air sur la face externe ou interne de cette branche (12) avec un léger serrage.

2. Tube en tôle équipé d'un anneau de bride selon la revendication 1,
caractérisé en ce que
le profil massif de l'anneau de bride (10) présente une paroi de forte épaisseur, comparativement à celle de la tôle constituant le tube (18).

3. Tube en tôle équipé d'un anneau de bride selon la revendication 1 ou 2,
caractérisé en ce que
la branche annulaire (12) est légèrement conique, au moins dans une partie (12b) bordant la bride de fixation (14).

4. Tube en tôle équipé d'un anneau de bride selon une des revendications précédentes,
caractérisé en ce que
le diamètre de la branche annulaire (12) décroît de la bride de fixation (14) à son extrémité libre (28), le diamètre externe de celle-ci étant légèrement inférieur au diamètre interne du tuyau (18).

5. Tube en tôle équipé d'un anneau de bride selon une des revendications 1 à 3
caractérisé en ce que
le diamètre de la branche annulaire (12) croît de la bride de fixation (14) à son extrémité libre (28), le diamètre interne de celle-ci étant légèrement supérieur au diamètre externe du tuyau (18).

6. Tube en tôle équipé d'un anneau de bride selon une des revendications précédentes,
caractérisé en ce qu'
il est obturé vers l'extrémité (20) du tube (18) par un cordon d'étanchéité.

7. Tube en tôle équipé d'un anneau de bride selon une des revendications précédentes,
caractérisé en ce que
la branche annulaire (12) présente des trous (38) disposés en série selon la direction périphérique et dans lesquels on peut enfoncer la paroi (40) du tube (18, 20).

8. Tube en tôle équipé d'un anneau de bride selon la revendication 7,
caractérisé en ce que
les trous ont une forme allongée selon la direction périphérique.

9. Tube en tôle équipé d'un anneau de bride selon une des revendications précédentes,
caractérisé en ce que
le tube (18, 20) est soudé sur la branche annulaire (12).

10. Tube en tôle équipé d'un anneau de bride selon une des revendications précédentes,
caractérisé en ce que
des sillons annulaires (34, 36) en prise les uns dans les autres sont emboutis dans la branche annulaire (12) et dans les parois du tube (18, 20).
